# EUROPÄISCHE PATENTSCHRIFT

(11) **EP 0 892 838 B1**
(45) Veröffentlichungstag und Bekanntmachung des Hinweises auf die Patenterteilung: **27.06.2001**
(21) Anmeldenummer: 97919319.0
(22) Anmeldetag: 04.04.1997
(51) Int. Cl.: C09K 5/00, C08F 220/04, C08F 251/00, C08F 283/04, C08G 69/10, C08G 73/06

(54) **VERWENDUNG VON ASPARAGINSÄURE-HALTIGEN POLYMEREN IN MIT BIOZIDEN VERSETZTEN KÜHLKREISLÄUFEN**
USE OF ASPARTIC ACID-CONTAINING POLYMERS IN COOLING CIRCUITS WITH ADDED BIOCIDES
UTILISATION DE POLYMERES CONTENANT DE L'ACIDE ASPARTIQUE DANS DES CIRCUITS DE REFROIDISSEMENT COMPRENANT DES BIOCIDES

(30) Priorität: 12.04.1996 DE 19614565
(43) Veröffentlichungstag der Anmeldung: 27.01.1999
(73) Patentinhaber: Henkel Kommanditgesellschaft auf Aktien, 40191 Düsseldorf (DE)
(72) Erfinder: HATER, Wolfgang, D-41564 Kaarst (DE); FRIEDRICH, Anja, D-40625 Düsseldorf (DE); SCHLAG, Michael, D-40593 Düsseldorf (DE)
(86) Internationale Anmeldenummer: EP9701690
(87) Internationale Veröffentlichungsnummer: WO9739078

(56) Entgegenhaltungen:
- EP-A- 0 672 625
- WO-A-94/01476
- WO-A-94/01486
- WO-A-94/19288
- DE-A- 4 300 772
- GB-A- 1 066 333

## Beschreibung

Die Erfindung liegt auf dem Gebiet der Konditionierung von Kühlwasser für wäßrige Kühlsysteme. Unter Konditionierung wird hierbei vor allem die Verminderung der korrosiven Wirkung der Wasserphase und ihre Stabilisierung gegenüber der Bildung von Niederschlägen, der Ablagerung von Härtebildnem und der Bildung biologischer Beläge verstanden. Die Erfindung ist sowohl für offene als auch für geschlossene Kühlsysteme geeignet und betrifft gleichermaßen Durchflußkühlsysteme und Kreislaufkühlsysteme. Sie ist insbesondere konzipiert für offene Kreislaufkühlsysteme. Da bei diesen der Kühleffekt auf der Verdunstung von Wasser beruht, sind sie wegen der damit verbundenen Aufkonzentrierung von Wasserinhaltsstoffen und dem freien Luftzutritt besonders anfällig gegen die Bildung anorganischer und organischer Beläge oder Ablagerungen.

Wesentliche Komponenten zur Kühlwasserkonditionierung sind Härtestabilisatoren, Dispergatoren, Korrosionsinhibitoren und Biozide. Als Härtestabilisatoren sind beispielsweise bekannt: anorganische Polyphosphate, Phosphonsäuren, Aminomethylenphosphonsäuren, Phosphorsäureester, Phosphonocarbonsäuren sowie Polycarbonsäuren, beispielsweise vom Typ der teilverseiften Polyacrylamide oder der Polymere bzw. Copolymere von Acrylsäure und/oder Methacrylsäure. Die letztgenannten Polycarbonsäuren können auch die Funktion von Dispergiermitteln übernehmen, d. h. sie stabilisieren mikrodispers verteilte Feststoffpartikel gegen Sedimentation und Schlammbildung. Außer den bereits genannten teilhydrolysierten Polyacrylamiden und den Polymeren bzw. Copolymeren von Acrylsäure und/oder Methacrylsäure können als Dispergiermittel eingesetzt werden: Polystyrolsulfonate, Polyvinylsulfonate, quartäre Ammoniumverbindungen, unverseifte Polyacrylamide und Polyalkylenglykole. Als Mikrobizide werden neben Stoffen, die auf Mikroorganismen giftig wirken, auch solche Stoffe eingesetzt, deren keimtötende Wirkung auf ihrem Oxidationspotential beruht. Oxidativ wirkende Mikrobizide haben den Nachteil, daß ihre Wirksamkeit verloren geht, wenn sie andere Stoffe oxidiert haben und dadurch verbraucht worden sind. Dieser Nachteil, der durch kontinuierliche oder stoßweise Nachdosierung ausgeglichen werden kann, erweist sich jedoch dann als Vorteil, wenn das Kühlwasser ganz oder teilweise aus dem Kühlsystem abgelassen wird. Da die oxidativ wirkenden Mikrobizide rasch verbraucht werden, sind sie in der Regel unwirksam geworden, wenn das damit versetzte Kühlwasser in die Umwelt gelangt. Beispiele derartiger oxidativ wirkender Mikrobizide sind Ozon, Chlor, Brom, Chlordioxid, Hypochlorite, Hypobromite oder Wasserstoffperoxid.

Die als Härtestabilisatoren und/oder als Dispergatoren eingesetzten phosphororganische Verbindungen oder organische Polymere weisen in der Regel den Nachteil auf, daß sie nicht biologisch abbaubar sind. Diese fehlende Abbaubarkeit ist so lange ein Vorteil, wie sich diese Konditioniermittel im Kühlkreislauf befinden. Die biologische Beständigkeit wird jedoch dann zum Nachteil, wenn das Kühlmedium ganz oder teilweise abgelassen und mit oder ohne abwassertechnische Behandlung in die Umwelt abgegeben wird. Daher besteht ein Bedarf nach Härtestabilisatoren und/oder Dispergatoren, die eine ausreichende biologische Abbaubarkeit besitzen, so daß sie spätestens dann rasch biologisch abgebaut werden können, wenn das damit versetzte Kühlwasser aus dem Kühlsystem abgelassen wird.

In neuerer Zeit sind biologisch abbaubare, zur Wasserkonditionierung einsetzbare Polymere beschrieben worden. Beispielsweise lehrt die WO 94/01476 Propfcopolymerisate von ungesättigten Monomeren und Zuckern, Verfahren zu ihrer Herstellung und ihre Verwendung. Die hier beschriebenen Polymere bestehen aus Propfcopolymerisaten aus Monosacchariden, Disacchariden und Oligossacchariden, deren Reaktionsprodukten und deren Derivaten und einer Monomermischung, erhältlich durch radikalische Pfropfcopolymerisation einer Monomermischung aus 1) 45 - 96 Gew% wenigstens einer monoethylenisch ungesättigten C₃₋₁₀-Monocarbonsäure, 2) 4 - 55 Gew% wenigstens eines monoethylenisch ungesättigten sulfonsäuregruppenhaltigen Monomeren, eines monoethylenisch ungesättigten Schwefelsäureesters und/oder Vinylphosphonsäure, 3) 0 - 30 Gew% wenigstens einer wasserlöslichen, monoethylenisch ungesättigten Verbindung, die mit 2 - 50 Mol Alkylenoxid pro Mol modifiziert ist, 4) 0 - 45 Gew% wenigstens eines weiteren wasserlöslichen, radikalisch polymerisierbaren Monomeren, 5) 0 - 30 Gew% anderer, in Wasser wenig löslicher bzw. unlöslicher, radikalisch polymerisierbarer Monomerer, die in der Summe aus 1) bis 5) 100 Gew% beträgt und wobei anstelle der Säuren auch deren Salze mit einwertigen Kationen eingesetzt werden können, in Gegenwart von Mono-, Di- und Oligosacchariden, deren Reaktionsprodukten und Derivaten oder deren Mischungen, wobei der Gehalt dieser Saccharidkomponenten in der Gesamtmischung 5-60 Gew% beträgt.

Die DE-A-43 00 772 beschreibt ebenfalls biologisch abbaubare Copolymere, Verfahren zu ihrer Herstellung und ihre Verwendung. Hierbei handelt es sich um Polymere aus 1) 10 - 70 Gew% monoethylenisch ungesättigten C₄₋₈-Dicarbonsäuren, 2) 20 - 85 Gew% monoethylenisch ungesättigten C₃₋₁₀-Monocarbonsäuren, 3) 1 - 50 Gew% einfach ungesättigten Monomeren, die nach Hydrolyse oder Verseifung zu Monomereinheiten mit einer oder mehreren an der C-C-Kette kovalent gebundenen Hydroxylgruppen umgewandelt werden können, und 4) 0 - 10 Gew% weiteren, radikalisch copolymerisierbaren Monomeren, wobei die Summe aus 1) - 4) 100 Gew% beträgt und wobei anstelle der Säuren auch deren Salze mit einwertigen Kationen eingesetzt werden können.

Biologisch abbaubare, zur Wasserkonditionierung geeignete Polymere können auch gefunden werden unter natürlich vorkommenden Polymeren und deren Derivaten, ausgewählt aus Polysacchariden, Polyglycosiden, Polyglucosiden, oxidierter Zellulose, oxidierter Stärke, oxidiertem Dextrin, Proteinen.

Als biologisch abbaubare Polymere, die in der Wasserbehandlung als Dispergiermittel oder als Mittel zur Scale-Inhibierung eingesetzt werden können, sind weiterhin Polyasparaginsäuren und Asparaginsäure-haltige Polymere vorgeschlagen worden. Beispielsweise beschreibt die WO 94/19409 die Herstellung und den Einsatz als Dispergiermittel von wasserlöslichen Salzen von beta-Polyasparaginsäure, d. h. einer Polyasparaginsäure, in der die Monomere mehrheitlich durch beta-Bindungen verknüpft sind. Die mittlere Molmasse liegt im Bereich zwischen etwa 1 000 und etwa 5 000. Aus der WO 92/16462 geht weiterhin hervor, daß eine derartige Polyasparaginsäure, die durch Hydrolyse von Anhydroasparaginsäure hergestellt wird, sich gut zur Verhinderung von Calciumcarbonat- und Calciumphosphat-Scale eignet. Weitere Angaben zur Synthese von alpha- und beta-Polyasparaginsäure können der US-A-5 057 597 entnommen werden. Hierbei wird die monomere Aminosäure in partikulärer Form in einem Fließbett auf eine Temperatur von mindestens 180 °C aufgeheizt und so lange bei einer Temperatur zwischen 180 und 250 °C gehalten, bis unter Wasserabspaltung der gewünschte Polymerisationsgrad zu Anhydroasparaginsäure erreicht ist. Die Anhydropolyasparaginsäure wird dann hydrolysiert, vorzugsweise alkalisch. Einen alternativen Herstellungsweg beschreibt die WO 93/23452, wonach man Maleinsäure mit überschüssigem Ammoniak bei Temperaturen im Bereich von 200 bis 300 °C zu Polyasparaginsäure umsetzt. Durch Reaktion mit Base kann die Säure in ihre Salze umgewandelt werden.

Die WO 94/01486 beschreibt modifizierte Polyasparaginsäuren, die beispielsweise als Wasserbehandlungsmittel verwendet werden können, sowie Verfahren zu ihrer Herstellung. Diese modifizierten Polyasparaginsäuren erhält man durch Polykondensation von 1 bis 99,9 Mol-% Asparaginsäure mit 99 bis 0,1 Mol-% an Fettsäuren, mehrbasischen Carbonsäuren, einbasischen Polyhydroxycarbonsäuren, Alkoholen, Aminen, alkoxylierten Alkoholen und Aminen, Aminozuckern, Kohlenhydraten, Zuckercarbonsäuren und/oder nichtproteinogenen Aminocarbonsäuren. Weiterhin können die modifizierten Polyasparaginsäuren hergestellt werden durch Polymerisieren von monoethylenisch ungesättigten Monomeren in Gegenwart von Polyasparaginsäuren nach Art einer radikalisch initiierten Propfcopolymerisation. Ergänzend hierzu beschreibt die WO 94/20563 ein Verfahren zur Herstellung von Umsetzungsprodukten aus Polyasparaginsäureimiden und Aminosäuren sowie Umsetzungsprodukte aus Polyasparaginsäureimiden mit Alkanolaminen oder aminierten Fettalkoholethoxylaten. Auch derartige Umsetzungsprodukte eignen sich als Scale-Inhibitor und als Dispergiermittel.

Weitere Polymere und Copolymere von Asparaginsäure, gegebenenfalls in Verbindung mit weiteren Aminosäuren, werden beispielsweise beschrieben in WO 92/17194, WO 94/03527, WO 94/21710 sowie DE-A-43 08 426. Die WO 94/19288 beschreibt die Verwendung von Polyasparaginsäure und einer großen Anzahl weiterer Produkte zur Verhinderung von Ablagerungen in einem Bauwerksentwässerungssystem, beispielsweise in Tunneln, Stollen, Staumauern, Dämmen und ähnlichem. Gemäß der Lehre der EP-A-672 625 erhält man verbesserte Mittel zur Wasserbehandlung, wenn man Polyasparaginsäure oder ein Derivat davon in Verbindung mit einer Phosphonsäure einsetzt. Dabei liegt das Gewichtsverhältnis von Polyasparaginsäure bzw. deren Derivat und der Phosphonsäure vorzugsweise im Bereich von 90 : 10 bis 10 : 90. Als bevorzugte Polyasparaginsäure wird beta-Polyasparaginsäure mit einem Molekulargewicht von 1 000 bis 10 000 eingesetzt.

Obwohl durch die vorstehend zitierte Literatur der Einsatz von biologisch abbaubaren Polymeren wie beispielsweise von Polyasparaginsäure oder von sonstigen Asparaginsäure-haltigen Polymeren zur Wasserbehandlung allgemein bekannt ist, ist der Einsatz dieser biologisch abbaubaren Stoffe zumindest in offenen Kühlsystemen problematisch: Es ist zu erwarten, daß diese Stoffe im Kühlkreislauf selbst rasch abgebaut werden, so daß ihre Wirkung schnell verloren geht und ihr Einsatz unwirtschaftlich ist. Die Erfindung stellt sich die Aufgabe, diese Polymere gegen biologischen Abbau im Kühlsystem zu stabilisieren, ohne den Abbau nach Verlassen des Kühlsystems zu behindern. Die Vorliteratur enthält keinen Hinweis darauf, daß derartige Produkte zusammen mit biozid wirkenden Oxidationsmitteln in Kühlkreisläufen eingesetzt werden können. Eine derartige Einsatzmöglichkeit erscheint fraglich, da erwartet werden kann, daß die Oxidationsmittel mit den Polymeren reagieren und diese desaktivieren. Die Erfindung stellt sich demgegenüber weiterhin die Aufgabe, eine Kombination von biologisch abbaubaren Polymeren und biozid wirkenden Oxidationsmitteln bereitzustellen, die zur Wasserkonditionierung in Kühlkreisläufen eingesetzt werden kann und die unter den Anwendungsbedingungen eine ausreichend lange Wirkungsdauer aufweist.

Die Aufgabe wird gelöst durch die Verwendung von biologisch abbaubaren organischen Polymeren mit einer mittleren Molmasse oberhalb von 500 in wäßrigen Kühlsystemen, dadurch gekennzeichnet, daß die Wasserphase der Kühlsysteme zusätzlich 0,05 bis 5 mg/l eines Oxidationsmittels mit einem positiveren Standard-Redoxpotential als Sauerstoff enthält.

Standard-Redoxpotentiale, auch als Normal-Potentiale bezeichnet, stellen allgemein bekannte thermodynamische Begriffe dar, die in Lehrbüchern der allgemeinen oder der physikalischen Chemie beschrieben werden. Beispielsweise genannt sei das Kapitel 11 des Lehrbuchs: H. R. Christen "Grundlagen der allgemeinen und anorganischen Chemie", Verlag Sauerländer-Salle, 1973. Dieses Lehrbuch enthält auf Seiten 692 bis 697 eine Liste unterschiedlicher Normal-Potentiale, wie sie auch in vielen anderen Lehrbüchern und Tabellenwerken gefunden werden kann. Die Größe des Standard-Redoxpotentials wird üblicherweise in Volt angegeben.

Vorzugsweise setzt man für den erfindungsgemäßen Verwendungszweck Oxidationsmittel mit einem Standard-Redoxpotential von größer als 0,4 Volt ein. Vorzugsweise wählt man dieses Oxidationsmittel aus aus Wasserstoffperoxid, Chlor, Brom, Chlordioxid, Hypochloriten, Hypobromiten und Ozon. Da diese Chemikalien mit Wasser Säure-Base- und/oder Disproportionierungs-Reaktionen eingehen können, werden unter den vorstehend genannten Oxidationsmitteln auch deren Umsetzungsprodukte mit Wasser verstanden.

Die biologische Abbaubarkeit kann nach unterschiedlichen Verfahren gemessen werden. Beispielsweise kann zur Beurteilung der biologischen Abbaubarkeit der modifizierte STURM-Test (OECD-Guideline Nr. 301 B) herangezogen werden, bei dem die während des Abbaus entstehende Menge an Kohlendioxid gemessen wird. Alternativ kann ein modifizierter MITI-Test (OECD-Guideline 301 for testing chemicals) verwendet werden, bei dem die während des Abbaus verbrauchte Sauerstoffmenge gemessen wird. Im Sinne dieser Erfindung werden Polymere als biologisch abbaubar angesehen, wenn nach einer Testzeit von 28 Tagen ein Abbau von mehr als 50 % beobachtet wird.

Die im Sinne der Erfindung einsetzbaren biologisch abbaubaren Polymere können beispielsweise ausgewählt sein aus
a) Propfcopolymerisaten aus Monosacchariden, Disacchariden und Oligossacchariden, deren Reaktionsprodukten und deren Derivaten und einer Monomermischung, erhältlich durch radikalische Pfropfcopolymerisation einer Monomermischung aus 1) 45 - 96 Gew% wenigstens einer monoethylenisch ungesättigten C₃₋₁₀-Monocarbonsäure, 2) 4 - 55 Gew% wenigstens eines monoethylenisch ungesättigten sulfonsäuregruppenhaltigen Monomeren, eines monoethylenisch ungesättigten Schwefelsäureesters und/oder Vinylphosphonsäure, 3) 0 - 30 Gew% wenigstens einer wasserlöslichen, monoethylenisch ungesättigten Verbindung, die mit 2 - 50 Mol Alkylenoxid pro Mol modifiziert ist, 4) 0 - 45 Gew% wenigstens eines weiteren wasserlöslichen, radikalisch polymerisierbaren Monomeren, 5) 0 - 30 Gew% anderer, in Wasser wenig löslicher bzw. unlöslicher, radikalisch polymerisierbarer Monomerer, die in der Summe aus 1) bis 5) 100 Gew% beträgt und wobei anstelle der Säuren auch deren Salze mit einwertigen Kationen eingesetzt werden können, in Gegenwart von Mono-, Di- und Oligosacchariden, deren Reaktionsprodukten und Derivaten oder deren Mischungen, wobei der Gehalt dieser Saccharidkomponenten in der Gesamtmischung 5 - 60 Gew% beträgt,
b) Polymeren aus 1) 10 - 70 Gew% monoethylenisch ungesättigten C₄₋₈-Dicarbonsäuren, 2) 20 - 85 Gew% monoethylenisch ungesättigten C₃₋₁₀-Monocarbonsäuren, 3) 1- 50 Gew% einfach ungesättigten Monomeren, die nach Hydrolyse oder Verseifung zu Monomereinheiten mit einer oder mehreren an der C-C-Kette kovalent gebundenen Hydroxylgruppen umgewandelt werden können, und 4) 0 - 10 Gew% weiteren, radikalisch copolymerisierbaren Monomeren, wobei die Summe aus 1) - 4) 100 Gew% beträgt und wobei anstelle der Säuren auch deren Salze mit einwertigen Kationen eingesetzt werden können,
c) natürlich vorkommenden Polymeren und deren Derivaten, ausgewählt aus Polysacchariden, Polyglycosiden, Polyglucosiden, oxidierter Zellulose, oxidierter Stärke, oxidiertem Dextrin, Proteinen,
d) organischen Polymeren, die zu mindestens 80 Mol-% aus Asparaginsäure bestehen.

Die Propfcopolymerisate der Gruppe a) sind näher beschrieben in WO 94/01476, die hiermit ausdrücklich zum Teil dieser Offenbarung gemacht wird. Gemäß dieser Referenz werden vorzugsweise eingesetzt: Als Monomere 1) Acryl- und/oder Methacrylsäure, deren Alkali-, Ammonium- und/oder Aminsalze, als Monomere der Gruppe 2) Allylsulfonsäure, Methallylsulfonsäure, Acrylamidomethylpropansulfonsäure, Vinylsulfonsäure, Sulfatoethyl(meth)acrylat, Vinylphosphonsäure und/oder die Salze dieser Säuren mit einwertigen Kationen, als Komponenten 3) Allylalkohol oder die Ester von ungesättigten Carbonsäuren wie Acrylsäure oder Methacrylsäure, deren Alkoholkomponente mit Alkylenoxid modifiziert ist, als Komponente 4) das Molekulargewicht erhöhende Monomere, sowie solche mit mehrfach monoethylenisch ungesättigten Doppelbindungen oder mit einer ethylenisch ungesättigten Doppelbindung und einer weiteren funktionellen vernetzend wirkenden Gruppe. Die Durchführung der Polymerisation ist in der genannten Literaturstelle WO 94/01476 näher beschrieben.

Die im Sinne der Erfindung weiterhin einsetzbaren Polymeren der Gruppe b) sind näher beschrieben in der DE-A-43 00 772, deren Inhalt hiermit ausdrücklich zum Teil dieser Offenbarung gemacht wird. Die Komponenten dieser Polymere sind vorzugsweise ausgewählt aus 1) Maleinsäure, Itakonsäure und Fumarsäure bzw. deren Salze, 2) Acryl- oder Methacrylsäure bzw. deren Salze und 3) Vinylacetat, Vinylpropionat und/oder Methylvinylether.

Bevorzugt können als organische Polymere reine Polyasparaginsäuren oder Asparaginsäure-haltige Copolymere eingesetzt werden, wie sie beispielsweise in der einleitend genannten Literatur aufgeführt sind. Bevorzugt ist es hierbei, das die organischen Polymere zu mindestens 95 Mol-%, vorzugsweise zu mindestens 98 Mol-% und insbesondere zu 100 Mol-% aus Asparaginsäure bestehen. Die mittlere Molmasse, die beispielsweise gemäß der eingangs zitierten WO 94/19409 durch Gelpermeationschromatographie bestimmt werden kann, liegt vorzugsweise im Bereich von etwa 1 000 bis etwa 5 000. Dabei liegt die Polyasparaginsäure bzw. der Polyasparaginsäure-Anteil des organischen Polymers vorzugsweise zu mindestens 50 % und insbesondere zu mindestens 70 % in der sogenannten beta-Form vor. Der Unterschied zwischen der alpha- und der beta-Verknüpfung ist in der eingangs zitierten US-A-5 057 597 formelmäßig dargestellt. Die Unterscheidung beruht darauf, ob die chemische Bindung zum Nachbarmonomer in der alpha- oder der beta-Position zu der durch die Polykondensation gebildeten Amidfunktionen erfolgt.

Die Konzentration der organischen Polymere in der Wasserphase der wäßrigen Kühlsysteme stellt man vorzugsweise so ein, daß sie im Bereich von etwa 1 bis etwa 50 mg/l, und insbesondere im Bereich zwischen etwa 5 und etwa 20 mg/l liegt. Dabei kann die optimale Einsatzkonzentration von dem Reinheitsgrad des eingesetzten Kühlwassers abhängen. Der Fachmann wird daher die Einsatzmenge experimentell an die jeweilige Wasserqualität anpassen.

Es ist üblich und im Sinne der Erfindung vorzuziehen, daß die Wasserphase der wäßrigen Kühlsysteme zusätzlich weitere Komponenten enthält, die Korrosionsoder Scale-inhibierend oder dispergierend wirken können. Beispielsweise genannt seien: 1 bis 10 mg/l Zinkionen, 1 bis 200 mg/l monomere oder oligomere Molybdationen, organische Phosphate in einer Konzentration, daß der Phosphorgehalt, berechnet als Phosphat, im Bereich 1 bis 20 mg/l Phosphat liegt, monomere, oligomere oder polymere anorganische Phosphate in einer Konzentration, daß der Phosphorgehalt, berechnet als Phosphat, im Bereich 1 bis 20 mg/l Phosphat liegt, sowie Buntmetallinhibitoren wie beispielsweise Triazole. Als weitere Korrosionsschutzkomponenten kann die Wasserphase bekannte Wirkstoffe enthalten wie beispielsweise Alkanolamine, insbesondere Triethanolamin, Borate, Sulfite, Sorbitol, Ascorbinsäure, Hydrochinon, Hydroxylamine wie insbesondere N,N-Diethylhydroxylamin, Nitrite, Nitrate und Silicate. Als weitere Additive mit korrosionsinhibierender und/oder dispergierender Wirkung können eingesetzt werden: Phosphatester, Polyphosphorsäureester, Aminophosphate, Aminomethylenphosphorsäuren, N-haltige Phosphate, insbesondere Aminoalkylenphosphonsäuren, Phosphonocarbonsäuren, Bernsteinsäureamid, Glukonate, Polyoxycarbonsäuren und deren Copolymere, Tanninderivate, Ligninsulfonate, sulfonierte Kondensationsprodukte des Naphthalins mit Formaldehyd, Polyacrylate, Polymethacrylate Polyacrylamide, Copolymere von Acrylsäure bzw. Methacrylsäure und Acrylamid, Phosphinsäure-haltige Homo- und Copolymere von Acrylsäure und Acrylamid, oligomere Phosphino-Bernsteinsäure-Verbindungen, sulfomethylierte oder sulfo ethylierte Polyacrylamide und Copolymere bzw. Terpolymere mit Acrylsäure und Maleinsäureester, N-Butylacrylamid und dessen Copolymere, Acrylamidopropionsulfonsäure und deren Copolymere, Maleinsäureanhydrid-Polymere und Copolymere, phosphinoalkylierte Acrylamidpolymere und Copolymere mit Acrylsäure, Citronensäure, Ethercarboxylate, oder oxydierte Kohlehydrate.

Um einen optimalen Korrosionsschutz zu erreichen, stellt man die Wasserphase der wäßrigen Kühlsysteme vorzugsweise auf einen pH-Wert im Bereich von etwa 7 bis etwa 9 ein. Die Dosierung der biozid wirkenden Oxidationsmittel in das Kühlsystem kann kontinuierlich oder vorzugsweise diskontinuierlich in Form einer Stoßbehandlung erfolgen.

Wie eingangs erwähnt, kann es sich bei den wäßrigen Kühlsystemen um Durchflußsysteme oder um offene oder geschlossene Kreislaufsysteme handeln. Die Erfindung ist besonders konzipiert zum Einsatz in offenen Kreislaufsystemen, da sie insbesondere geeignet ist, den in derartigen Systemen auftretenden Problemen der Scale-Bildung, der Bildung von Niederschlägen und/oder der biologischen Verunreinigung entgegenzuwirken.

Zur Überprüfung der Beständigkeit von Polyasparaginsäure in Gegenwart unterschiedlicher bekanntermaßen biozid wirkender Oxiditationsmittel wurde die Scale-inhibierende Wirkung der Polyasparaginsäure in Gegenwart des Oxidationsmittels als Funktion der Zeit überprüft. Als Polyasparaginsäure wurde das Produkt Donlar GS 12-30 der Donlar Corporation, 6502 S. Archer Ave., Bedford Park, IL 60501-9998, USA ausgewählt. Das Polymer hat eine Molmasse, bestimmt durch Gelpermeationschromatographie, von etwa 3 000 und weist ein Verhältnis von alphazu beta-Verknüpfungen von etwa 30 : 70 auf. Das Polymer wurde in einer Dosierung von 10 mg/l in Wasser eingesetzt, dessen pH-Wert mit verdünnter Natronlauge oder verdünnter Schwefelsäure auf pH 8,5 eingestellt wurde. Hierzu wurden jeweils 0,4 mg/l Oxidationsmittel gegeben, wobei in getrennten Versuchen als Oxidationsmittel jeweils verwendet wurden: a) Natriumhypochlorit, b) Chlordioxid, c) Wasserstoffperoxid, d) eine Mischung von Natriumhypochlorit und Natriumhypobromit im Gewichtsverhältnis 1 : 1.

Sofort nach Zugabe des Oxidationsmittels und dann jeweils nach einer halben Stunde, bis zu einer Gesamtprüfdauer von 4 Stunden, wurde die Scale-inhibierende Wirkung des Polyasparaginsäure/Oxidationsmittel-Gemischs überprüft. Die Wirksamkeitsprüfung wurde auf folgende Weise vorgenommen: Es wurde ein Testwasser hergestellt, das 5,4 mmol/l Calciumionen und 1,8 mmol/l Magnesiumionen enthielt. Das Testwasser wurde zunächst mit dem Polyasparaginsäure/Oxidationsmittel-Gemisch und anschließend mit 20 mmol/l Natriumhydrogencarbonat versetzt. Die Testlösung wurde mit einer Schlauchpumpe mit einer Geschwindigkeit von 0,5 l/h durch die Glaswendel eines Glaskühlers gepumpt, in dessen Außenraum Wasser mit einer Temperatur von 80 °C zirkulierte. Nach einer Prüfdauer von 2 Stunden wurde der Glaskühler entleert und der entstandene Härteniederschlag mit Salzsäure abgelöst. In dieser Salzsäure-Lösung wurde der Gehalt an Härtebildner-lonen titrimetrisch bestimmt. Die Scale-inhibierende Wirkung der Prüfmischung ist um so besser, je weniger Härtebildner-lonen die Salzsäure-Lösung enthält. Als Prüfzeitpunkt wurde jeweils der Beginn der 2-stündigen Prüfung angenommen.

Die Versuche zeigten, daß bei der Verwendung von Natriumhypochlorit, Chlordioxid oder Wasserstoffperoxid innerhalb der Prüfdauer von 4 Stunden kein meßbarer Abfall der Scale-inhibierenden Wirkung festzustellen war. Bei der Verwendung des Gemischs d) waren nach 4 Stunden noch etwa 95 % der Ausgangswirksamkeit vorhanden.

Auf ähnliche Weise wurde die Chlorstabilität zweier weiterer biologisch abbaubarer Polymere untersucht: Ein anionisch modifiziertes Propfcopolymer (Produkt W 70280 gemäß DE-A-42 21 381, Lieferant: Firma Stockhausen, Deutschland) und ein Acrylsäure-Maleinsäure-Vinylalkohol-Terpolymer (Produkt W 71409 gemäß DE-A-43 00 772, Lieferant: Firma Stockhausen, Deutschland). Das erstere Polymer wurde in einer Konzentration von 5 ppm, das letztere in einer Konzentration von 15 ppm in Wasser gelöst und der pH-Wert auf 8,5 eingestellt. Die Lösungen wurden geteilt. Zu jeweils einer Teillösung wurden 0,4 mg/l Chlor gegeben. Nach 4 Stunden wurde die scaleinhibierende Wirkung dieser Lösungen anhand der vorstehend beschriebenen Testmethode untersucht. Dabei wurde kein Unterschied der scaleinhibierenden Wirkung zwischen der jeweils gechlorten und der jeweils ungechlorten Lösung festgestellt. Die Polymere sind demnach gegenüber Chlor stabil.

Das Abbauverhalten von Polyasparaginsäure ohne und mit Dosierung eines Oxidationsmittels (Natriumhypochlorit) wurde einen Monat lang an einem Kühlturm untersucht. Dabei wurden täglich zwischen 20 und 50 mg/l Polyasparaginsäure zugegeben und jeweils vor der nächsten Zugabe der tatsächliche Polyasparaginsäure-Gehalt des Kühlkreislaufs bestimmt. Die analytische Bestimmung erfolgte dabei derart, daß die Polyasparaginsäure aus einer mit Natriumcitrat gepufferten Lösung mit einem Kationentensid (Hyamin 1622, Rohm & Haas) ausgefällt wurde. Hierdurch entstand eine Trübung, die photometrisch bestimmt und mit einer Eichkurve verglichen wurde.

Während der ersten beiden Versuchswochen nahmen die tatsächlich gefundenen Polyasparaginsäure-Mengen trotz Nachdosierung kontinuierlich ab und lagen im Bereich zwischen etwa 11 und etwa 2 mg/l. Nach 2 Wochen wurde unter fortgesetzter täglicher Dosierung von 30 bis 40 mg/l Polyasparaginsäure zusätzlich 0,2 mg/l Chlor in Form von Natriumhypochlorit dosiert. Hierauf stieg der Gehalt an bestimmbarer Polyasparaginsäure im Kühlkreislauf innerhalb von 2 Tagen auf etwa 20 mg/l an und verblieb für die restliche Versuchsdauer bei diesem Wert. Der Abbau der Polyasparaginsäure im Kühlkreislauf wird also durch die zusätzliche Dosierung von Natriumhypochlorit deutlich verringert.

## Patentansprüche

1. Verwendung von biologisch abbaubaren organischen Polymeren mit einer mittleren Molmasse oberhalb von 500, die eine biologische Abbaubarkeit von mehr als 50 % nach einer Testzeit von 28 Tagen aufweisen, in wäßrigen Kühlsystemen, dadurch gekennzeichnet, daß die Wasserphase der Kühlsysteme zusätzlich 0,05 bis 5 mg/l eines Oxidationsmittels mit einem positiveren Standard-Redoxpotential als Sauerstoff enthält.

2. Verwendung nach Anspruch 1, dadurch gekennzeichnet, daß die organischen Polymere ausgewählt sind aus
a) Propfcopolymerisaten aus Monosacchariden, Disacchariden und Oligossacchariden, deren Reaktionsprodukten und deren Derivaten und einer Monomermischung, erhältlich durch radikalische Pfropfcopolymerisation einer Monomermischung aus
1) 45 - 96 Gew% wenigstens einer monoethylenisch ungesättigten C₃₋₁₀-Monocarbonsäure, 2) 4 - 55 Gew% wenigstens eines monoethylenisch ungesättigten sulfonsäuregruppenhaltigen Monomeren, eines monoethylenisch ungesättigten Schwefelsäureesters und/oder Vinylphosphonsäure, 3) 0 - 30 Gew% wenigstens einer wasserlöslichen, monoethylenisch ungesättigten Verbindung, die mit 2 - 50 Mol Alkylenoxid pro Mol modifiziert ist, 4) 0 - 45 Gew% wenigstens eines weiteren wasserlöslichen, radikalisch polymerisierbaren Monomeren, 5) 0 - 30 Gew% anderer, in Wasser wenig löslicher bzw. unlöslicher, radikalisch polymerisierbarer Monomerer, die in der Summe aus 1) bis 5) 100 Gew% beträgt und wobei anstelle der Säuren auch deren Salze mit einwertigen Kationen eingesetzt werden können, in Gegenwart von Mono-, Di- und Oligosacchariden, deren Reaktionsprodukten und Derivaten oder deren Mischungen, wobei der Gehalt dieser Saccharidkomponenten in der Gesamtmischung 5 - 60 Gew% beträgt,
b) Polymeren aus 1) 10 - 70 Gew% monoethylenisch ungesättigten C₄₋₈-Dicarbonsäuren, 2) 20 - 85 Gew% monoethylenisch ungesättigten C₃₋₁₀-Monocarbonsäuren, 3) 1- 50 Gew% einfach ungesättigten Monomeren, die nach Hydrolyse oder Verseifung zu Monomereinheiten mit einer oder mehreren an der C-C-Kette kovalent gebundenen Hydroxylgruppen umgewandelt werden können, und 4) 0 - 10 Gew% weiteren, radikalisch copolymerisierbaren Monomeren,
wobei die Summe aus 1) - 4) 100 Gew% beträgt und wobei anstelle der Säuren auch deren Salze mit einwertigen Kationen eingesetzt werden können,
c) natürlich vorkommenden Polymeren und deren Derivaten, ausgewählt aus Polysacchariden, Polyglycosiden, Polyglucosiden, oxidierter Zellulose, oxidierter Stärke, oxidiertem Dextrin, Proteinen,
d) organischen Polymeren, die zu mindestens 80 Mol-% aus Asparaginsäure bestehen.

3. Verwendung nach einem oder beiden der Ansprüche 1 und 2, dadurch gekennzeichnet, daß das Standard-Redoxpotential des Oxidationsmittels größer als 0,4 Volt ist.

4. Verwendung nach einem oder mehreren der Ansprüche 1 bis 3, dadurch gekennzeichnet, daß das Oxidationsmittel ausgewählt ist aus Wasserstoffperoxid, Chlor, Brom, Chlordioxid, Hypochloriten, Hypobromiten, und Ozon, oder jeweils deren Umsetzungsprodukten mit Wasser.

5. Verwendung nach einem oder mehreren der Ansprüche 1 bis 4, dadurch gekennzeichnet, daß organischen Polymere der Gruppe d) eingesetzt werden, die zu mindestens 95 mol-% aus Asparaginsäure bestehen.

6. Verwendung nach Anspruch 5, dadurch gekennzeichnet, daß die organischen Polymere eine mittlere Molmasse im Bereich 1000 bis 5000 aufweisen.

7. Verwendung nach einem oder beiden der Ansprüche 5 und 6, dadurch gekennzeichnet, daß der Polyasparaginsäure-Anteil der organischen Polymere zu mindestens 50 % in der ß-Form vorliegt.

8. Verwendung nach einem oder mehreren der Ansprüche 1 bis 7, dadurch gekennzeichnet, daß die Konzentration der organischen Polymere in der Wasserphase der wäßrigen Kühlsysteme im Bereich 1 bis 50 mg/l liegt.

9. Verwendung nach Anspruch 8, dadurch gekennzeichnet, daß die Konzentration der organischen Polymere in der Wasserphase der wäßrigen Kühlsysteme im Bereich 5 bis 20 mg/l liegt.

10. Verwendung nach einem oder mehreren der Ansprüche 1 bis 9, dadurch gekennzeichnet, daß die Wasserphase der wäßrigen Kühlsysteme zusätzlich eine oder mehrere der folgenden Komponenten enthält: 1 bis 10 mg/l Zinkionen, 1 bis 200 mg/l monomere oder oligomere Molybdationen, organische Phosphate in einer Konzentration, daß der Phosphorgehalt, berechnet als Phosphat, im Bereich 1 bis 20 mg/l Phosphat liegt, monomere, oligomere oder polymere anorganische Phosphate in einer Konzentration, daß der Phosphorgehalt, berechnet als Phosphat, im Bereich 1 bis 20 mg/l Phosphat liegt, Alkanolamine, Borate, Sulfite, Sorbitol, Ascorbinsäure, Hydrochinon, Hydroxylamine, Nitrite, Nitrate, Silicate, monomere, oligomere oder polymere Carbonsäuren mit chelatisierender Wirkung, deren Amide oder Ester, Tanninderivate, Ligninsulfonate, sulfonierte Kondensationsprodukte des Naphthalins mit Formaldehyd, und/oder Buntmetallinhibitoren.

11. Verwendung nach einem oder mehreren der Ansprüche 1 bis 10, dadurch gekennzeichnet, daß die Wasserphase der wäßrigen Kühlsysteme einen pH-Wert im Bereich 7 bis 9 aufweist.

12. Verwendung nach einem oder mehreren der Ansprüche 1 bis 11, dadurch gekennzeichnet, daß es sich bei den Kühlsystemen um offene Kreislaufsysteme handelt.

## Claims

1. The use of biologically degradable organic polymers with an average molecular weight above 500, which have a biological degradability of more than 50% after a test period of 28 days, in water-based cooling systems, characterized in that the water phase of the cooling systems additionally contains 0.05 to 5 mg/l of an oxidizing agent with a more positive standard redox potential than oxygen.

2. The use claimed in claim 1, characterized in that the organic polymers are selected from
a) graft copolymers of monosaccharides, disaccharides and oligosaccharides, reaction products and derivatives thereof and a monomer mixture obtainable by radical graft copolymerization of a monomer mixture of 1) 45 to 96% by weight of at least one monoethylenically unsaturated C₃₋₁₀ monocarboxylic acid, 2) 4 to 55% by weight of at least one monoethylenically unsaturated monomer containing sulfonic acid groups, a monoethylenically unsaturated sulfuric acid ester and/or vinyl phosphonic acid, 3) 0 to 30% by weight of at least one water-soluble, monoethylenically unsaturated compound modified with 2 to 50 moles of alkylene oxide per mole, 4) 0 to 45% by weight of at least one other water-soluble, radical-polymerizable monomer, 5) 0 to 30% by weight of other little water-soluble or substantially water-insoluble radical-polymerizable monomers, the sum of 1) to 5) being 100% by weight and the acids being replaceable by their salts with monovalent cations, in the presence of mono-, di- and oligosaccharides, reaction products and derivatives or mixtures thereof, the content of the saccharide components in the mixture as a whole being 5 to 60% by weight,
b) polymers of 1) 10 to 70% by weight of monoethylenically unsaturated C₄₋₈ dicarboxylic acids, 2) 20 to 85% by weight of monoethylenically unsaturated C₃₋₁₀ monocarboxylic acids, 3) 1 to 50% by weight of monounsaturated monomers which, after hydrolysis or saponification, can be converted into monomer units with one or more hydroxyl groups covalently bonded to the C-C chain and 4) 0 to 10% by weight of other radical-copolymerizable monomers, the sum of 1) to 4) being 100% by weight and the acids being replaceable by their salts with monovalent cations,
c) naturally occurring polymers and derivatives thereof selected from polysaccharides, polyglycosides, polyglucosides, oxidized cellulose, oxidized starch, oxidized dextrin, proteins,
d) organic polymers of which at least 80 mole-% consist of aspartic acid.

3. The use claimed in one or both of claims 1 and 2, characterized in that the standard redox potential of the oxidizing agent is greater than 0.4 volt.

4. The use claimed in one or more of claims 1 to 3, characterized in that the oxidizing agent is selected from hydrogen peroxide, chlorine, bromine, chlorine dioxide, hypochlorites, hypobromites and ozone or their reaction products with water.

5. The use claimed in one or more of claims 1 to 4, characterized in that organic polymers of group d) of which at least 95 mole-% consists of aspartic acid are used.

6. The use claimed in claim 5, characterized in that the organic polymers have an average molecular weight of 1,000 to 5,000.

7. The use claimed in one or both of claims 5 and 6, characterized in that at least 50% of the polyaspartic acid component of the organic polymers is present in the beta-form.

8. The use claimed in one or more of claims 1 to 7, characterized in that the concentration of the organic polymers in the water phase of the aqueous cooling systems is in the range from 1 to 50 mg/l.

9. The use claimed in claim 8, characterized in that the concentration of the organic polymers in the water phase of the water-based cooling systems is in the range from 5 to 20 mg/l.

10. The use claimed in one or more of claims 1 to 9, characterized in that the water phase of the water-based cooling systems additionally contains one or more of the following components : zinc ions (1 to 10 mg/l), monomeric or oligomeric molybdate ions (1 to 200 mg/l), organic phosphates in such a concentration that the phosphorus content, expressed as phosphate, is between 1 and 20 mg/l phosphate, monomeric, oligomeric or polymeric inorganic phosphates in such a concentration that the phosphorus content, expressed as phosphate, is between 1 and 20 mg/l phosphate, alkanolamines, borates, sulfites, sorbitol, ascorbic acid, hydroquinone, hydroxylamines, nitrites, nitrates, silicates, monomeric, oligomeric or polymeric carboxylic acids with a chelating effect, amides or esters thereof, tannin derivatives, lignin sulfonates, sulfonated naphthalene/formaldehyde condensates and/or non-ferrous metal inhibitors.

11. The use claimed in one or more of claims 1 to 10, characterized in that the water phase of the water-based cooling systems has a pH value of 7 to 9.

12. The use claimed in one or more of claims 1 to 11, characterized in that the cooling systems are open circulation systems.

## Revendications

1. Utilisation de polymères organiques biodégradables possédant une masse molaire moyenne supérieure à 500, qui présentent une biodégradabilité supérieure à 50 % après une période de test de 28 jours, dans des systèmes de refroidissement aqueux, caractérisée en ce que la phase aqueuse des systèmes de refroidissement contient en plus 0,05 à 5 mg/l d'un oxydant présentant un potentiel redox standard plus positif que l'oxygène.

2. Utilisation selon la revendication 1, caractérisée en ce que les polymères organiques sont sélectionnés parmi les composés suivants:
a) Copolymères par greffe à base de monosaccharides, de disaccharides et d'oligosaccharides, de leurs produits de réaction et de leurs dérivés et d'un mélange de monomères, obtenables par copolymérisation par greffe par voie radicalaire d'un mélange de monomères constitué de
1) 45 à 96 % en poids d'au moins un acide monocarboxylique en C₃₋₁₀ à insaturation monoéthylénique, 2) 4 à 55 % en poids d'au moins un monomère renfermant des groupes d'acide sulfonique à insaturation monoéthylénique, d'un ester de l'acide sulfurique à insaturation monoéthylénique et/ou d'acide vinylphosphonique, 3) 0 à 30 % en poids d'au moins un composé à insaturation monoéthylénique, soluble dans l'eau, qui est modifié avec 2 à 50 mol d'oxyde d'alkylène par mol, 4) 0 à 45 % en poids d'au moins un autre monomère polymérisable par voie radicalaire, soluble dans l'eau, 5) 0 à 30 % en poids d'autres monomères polymérisables par voie radicalaire, peu solubles ou insolubles dans l'eau, la somme de 1) à 5) s'élevant à 100 % en poids et au lieu des acides, les sels de ceux-ci avec des cations monovalents pouvant également être utilisés, en présence de mono-, de di- et d'oligosaccharides, de produits de réaction et de dérivés de ceux-ci ou de leurs mélanges, la concentration de ces composants saccharidiques dans le mélange total atteignant 5 à 60 % en poids,
b) des polymères se composant de 1) 10 à 70 % en poids d'acides dicarboxyliques en C₄₋₈ à insaturation monoéthylénique, 2) 20 à 85 % en poids d'acides monocarboxyliques en C₃₋₁₀ à insaturation monoéthylénique, 3) 1 à 50 % en poids de monomères monoinsaturés, qui peuvent être convertis après hydrolyse ou saponification en motifs monomères comportant un ou plusieurs groupes hydroxyle liés de façon covalente à la chaîne C-C et 4) 0 à 10 % en poids d'autres monomères copolymérisables par voie radicalaire, la somme de 1) à 4) s'élevant à 100 % en poids et au lieu des acides, les sels de ceux-ci avec des cations monovalents pouvant également être utilisés,
c) des polymères présents à l'état naturel et les dérivés de ceux-ci, sélectionnés parmi les polysaccharides, les polyglycosides, les polyglucosides, la cellulose oxydée, l'amidon oxydé, la dextrine oxydée et des protéines.
d) des polymères organiques constitués à au moins 80 mol % d'acide aspartique.

3. Utilisation selon une des revendications 1 et 2 ou selon les deux, caractérisée en ce que le potentiel redox standard de l'oxydant est supérieur à 0,4 Volt.

4. Utilisation selon une ou plusieurs des revendications 1 à 3, caractérisée en ce que l'oxydant est sélectionné parmi l'eau oxygénée, le chlore, le brome, le dioxyde de chlore, les hypochlorites, les hypobromites et l'ozone, ou leurs produits de réaction avec l'eau respectifs.

5. Utilisation selon une ou plusieurs des revendications 1 à 4, caractérisée en ce que l'on utilise des polymères organiques du groupe d), qui sont constitués à au moins 95 mol % d'acide aspartique.

6. Utilisation selon la revendication 5, caractérisée en ce que les polymères organiques présentent une masse molaire moyenne comprise dans l'intervalle de 1000 à 5000.

7. Utilisation selon une des revendications 5 et 6 ou selon les deux, caractérisée en ce que la fraction d'acide aspartique des polymères organiques est présente sous la forme bêta à raison d'au moins 50 %.

8. Utilisation selon une ou plusieurs des revendications 1 à 7, caractérisée en ce que la concentration des polymères organiques dans la phase aqueuse des systèmes de refroidissement aqueux est comprise dans l'intervalle de 1 à 50 mg/l.

9. Utilisation selon la revendication 8, caractérisée en ce que la concentration des polymères organiques dans la phase aqueuse des systèmes de refroidissement aqueux est comprise dans l'intervalle de 5 à 20 mg/l.

10. Utilisation selon une ou plusieurs des revendications 1 à 9, caractérisée en ce que la phase aqueuse des systèmes de refroidissement aqueux renferme en plus un ou plusieurs des composants suivants: 1 à 10 mg/l d'ions de zinc, 1 à 200 mg/l d'ions de molybdate monomères ou oligomères, des phosphates organiques à une concentration telle que la teneur en phosphore, calculée comme phosphate, se situe dans l'intervalle de 1 à 20 mg/l, des phosphates inorganiques monomères, oligomères ou polymères dans une proportion telle que la teneur en phosphore, calculée comme phosphate, soit comprise dans l'intervalle de 1 à 20 mg/l de phosphate, des alcanolamines, des borates, des sulfites, du sorbitol, de l'acide ascorbique, de l'hydroquinone, des hydroxyalamines, des nitrites, des nitrates, des silicates, des acides carboxyliques monomères, oligomères ou polymères doués d'un pouvoir chélateur, les amides ou les esters de ceux-ci, des dérivés de tanin, des sulfonates de lignine, des produits de condensation sulfonés de la naphtaline avec de l'aldéhyde formique et/ou des inhibiteurs de métaux lourds non ferreux.

11. Utilisation selon une ou plusieurs des revendications 1 à 10, caractérisée en ce que la phase aqueuse des systèmes de refroidissement aqueux présente un pH compris dans l'intervalle de 7 à 9.

12. Utilisation selon une ou plusieurs des revendications 1 à 11, caractérisée en ce que les systèmes de refroidissement sont des systèmes à circuit ouvert.
